# EUROPEAN PATENT SPECIFICATION

(11) **EP 0 851 340 B1**
(45) Date of publication and mention of the grant of the patent: **17.12.2003**
(21) Application number: 97309111.9
(22) Date of filing: 13.11.1997
(51) Int. Cl.: G06F 3/12, H04N 1/00

(54) **Apparatus and method for producing printable data for a personal digital assistant**
Vorrichtung und Verfahren zur Produktion von druckbaren Daten für Mikro-tragbaren Rechner
Dispositif et méthode de production de données imprimables pour assistant numérique personnel

(30) Priority: 27.12.1996 KR 9673979
(43) Date of publication of application: 01.07.1998
(73) Proprietor: Samsung Electronics Co., Ltd., Suwon City, Kyungki-do (KR)
(72) Inventor: Lee, Je-hyoung, Karak-dong, Songpa-gu, Seoul (KR)
(74) Representative: Robinson, Ian Michael

(56) References cited:
- EP-A- 0 426 412
- MACFORMAT, 1 September 1993, FUTURE PUBLISHING,LTD,UK, XP002061491

## Description

The present invention relates generally to the field of personal digital assistants (PDA), and more particularly, to a printer module and a printing method for a PDA.

It is widely recognised that user demands for data communications services are becoming increasingly diversified. These demands have been satisfied through developments in data communications technology, such as the development of the personal digital assistant PDA. The PDA, serving as a portable computer, a fax, and an electronic pocket book, is so named because it provides personal and multimedia services which are the aims of the recent data communications technology. That is, the PDA enables a user to easily access a small and portable terminal using a pen or voice instead of a conventional keyboard, and provides a graphic user interface (GUI) environment. In addition, the PDA serves as a notebook computer which allows external communications.

Especially, communications including Internet connections, PSTN connection to an information medium like UNITEL, and FAX transceiving have recently become the most significant function of the PDA.

Generally, PDA fax transmissions are performed by means of a simple note made on a memo pad included in the PDA. In a conventional PDA, a note is printed by direct connection to a printer or by using fax transmission. However, the former method requires a driver program for driving the printer, thus resulting in development constraints upon the driver program and a portable printer. Therefore, the latter method is used.

However, since the purpose of the conventional fax transmission technology is simply to transmit a note by fax, it is on occasion inconvenient to transmit a document and utilise fax transmission for printing. Especially, header output such as reception time, a fax number, and a page number on the upper portion of a fax note incurs inconvenience to a user.

MACFORMAT, 1 September 1993, Future Publishing Ltd, UK, page 21, XP002061491, discloses a Personal Digital Assistant wherein a user can select whether a fax has a cover sheet or not, as well as a format of the fax.

EP-A-0 426,412 (CANON KK) discloses a compound electronic apparatus of a personal computer and a facsimile wherein a print image such as a document can be directly facsimile transmitted by selecting a print command menu of an application program such as a word processor.

EP-A-0,629,077 (Microsoft Corporation) discloses a user interface of an intelligent facsimile machine where a display screen displays a plurality of menus and allows the user to select from the menus. As one option, the user may include a personal header at the top of each transmitted page after a cover page, containing the sender's name, fax number, company name and date.

An aim of at least preferred embodiments of the present invention is to provide printing apparatus and a printing method for a PDA whose fax transmission function is improved.

According to a first aspect of the present invention, there is provided a method as set forth in claim 1 appended hereto.

According to a second aspect of the present invention there is provided an apparatus as set forth in claim 2 appended hereto.

The method and apparatus will also find application in fields other than a Personal Digital Assistant, and other examples in the field of digital communications will be apparent to the skilled person, including, for example, a portable laptop computer.

For a better understanding of the invention, and to show how embodiments of the same may be carried into effect, reference will now be made, by way of example, to the accompanying diagrammatic drawings, in which:
Figure 1 is a block diagram of a preferred printer apparatus for a PDA;
Figure 2 is a flowchart outlining the operation of the printer of Figure 1;
Figure 3 is a detailed flowchart outlining the fax transmission step of Figure 2; and
Figure 4 is a detailed flowchart outlining the fax transmission step of Figure 3.

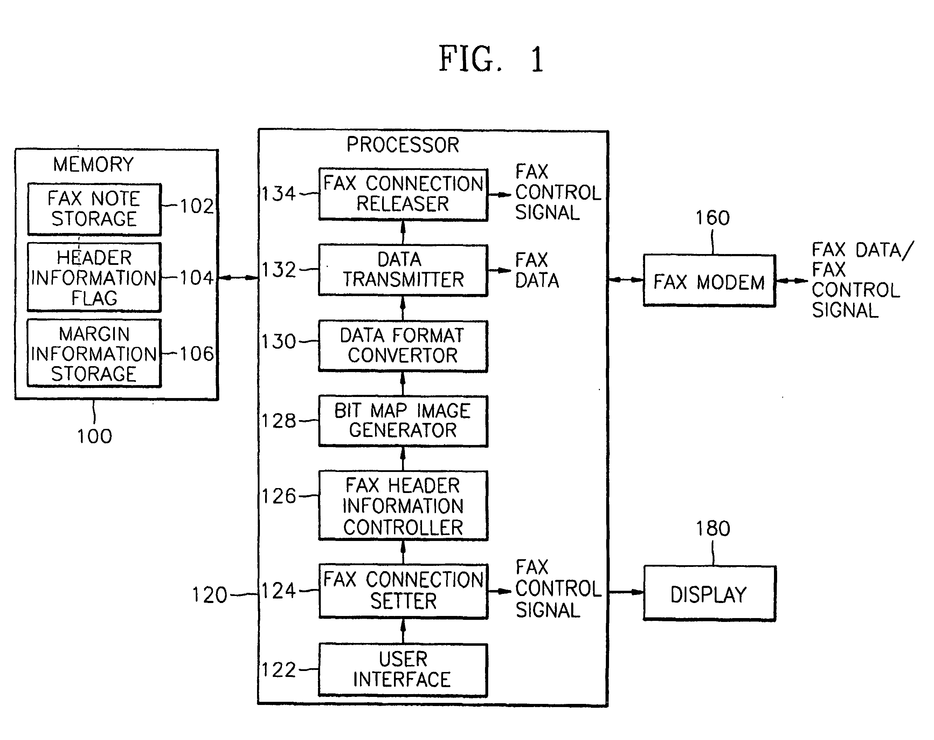

Referring to Figure 1, the preferred printer apparatus for a PDA includes: a display 180 for displaying characters and graphic data; a fax modem 160 for transmitting and receiving fax data; a memory 100 for storing data, and a processor 120 for processing data stored in the memory 100. The memory 100 includes: a fax note storage 102; a header information flag 104; and a margin information storage 106. The processor 120 includes: a user interface 122; a fax connection setter 124; a fax header information controller 126; a bit map image generator 128; a data format converter 130; a data transmitter 132; and a fax connection releaser 134.

The user interface 122 provides a user interface for selecting a fax note which is stored in the memory 100 and to be transmitted by fax, inserting/removing a fax header, setting upper, lower, right, and left margins of the fax note, through the display 180, and receiving a fax transmission instruction. That is, an interface is provided to enable a user to edit a note or output a note using a facsimile telegraph. For example, when a lease contract is to be output, a corresponding note is selected and the user may determine whether to insert or remove a header before fax transmission. In addition, the user can determine how much upper, lower, right, and left margins to allocate. The information of the user selection is stored in a flag register so that it can be referred to in a fax transmission module. After the user selection is completed, the fax transmission instruction is issued.

The fax note storage 102 stores a fax note which is selected for transmission by the user. The header information flag 104 stores insertion or removal information of a header selected by the user in the user interface 122. The margin information storage 106 stores information regarding the upper, lower, right, and left margins for the fax note selected by the user in the user interface 122.

The fax connection setter 124 performs a predetermined initialization for receiving a fax upon input of the fax transmission instruction from the user interface 122, sets the PDA to a fax transmission stand-by state for detecting a ring signal of the other part which receives fax, and prepares for transmission by setting an environment for fax transmission. The fax header information controller 126 reads information stored in the header information flag 104 and inserts or removes the fax header according to the flag information, when the fax connection setter 124 is ready for fax transmission.

The bit map image generator 128 reads fax header data inserted by the fax header information controller 126, reads the fax note and margin information from the fax information storage 102 and the margin information storage 106, and generates bit map image data. The data format converter 130 converts the bit map image data generated by the bit map image data generator 128 into Modified Huffman (MH) codes which are a data format for fax transmission. The data transmitter 132 transmits the data converted in the data format converter 130.

The fax connection releaser 134 terminates the fax connection when the data is completely transmitted from the data transmitter 132, informs the receiving fax machine of the end of transmission, turns off the modem and returns an allocated memory when a confirm message is received from the other fax machine, and notifies to the user interface 122 that the fax transmission has been completed.

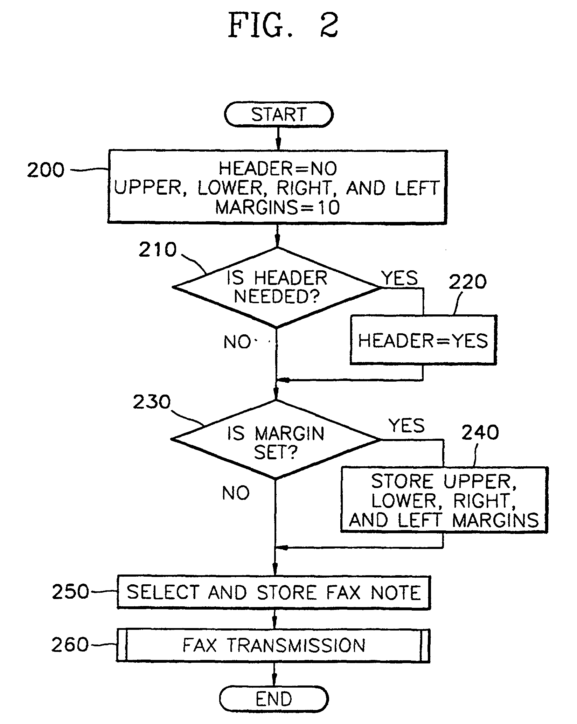

Figure 2 is a flowchart outlining the operation of the PDA printer. Firstly, default values may be set. For example, the header information flag 104 is set to 'NO' to notify no need for header information and the upper, lower, right, and left margins of the fax note are set to 10, in step 200. Then, the fax header insertion or removal menu item provided from the user interface 122 is selected in step 210, and if 'HEADER NEEDED', that is, 'HEADER = YES' is selected, the selected information is stored in the header information flag 104, in step 220. If 'HEADER NOT NEEDED' is selected, the upper, lower, right, and left margin items are selected in the user interface 122 in step 230, and the selected margin information is stored in the margin information storage 106, in step 240. A fax note to be transmitted is selected in the user interface 122 and the selected fax note is stored in the fax note storage 102, in step 250. Then, fax transmission is performed and the procedure ends, in step 260.

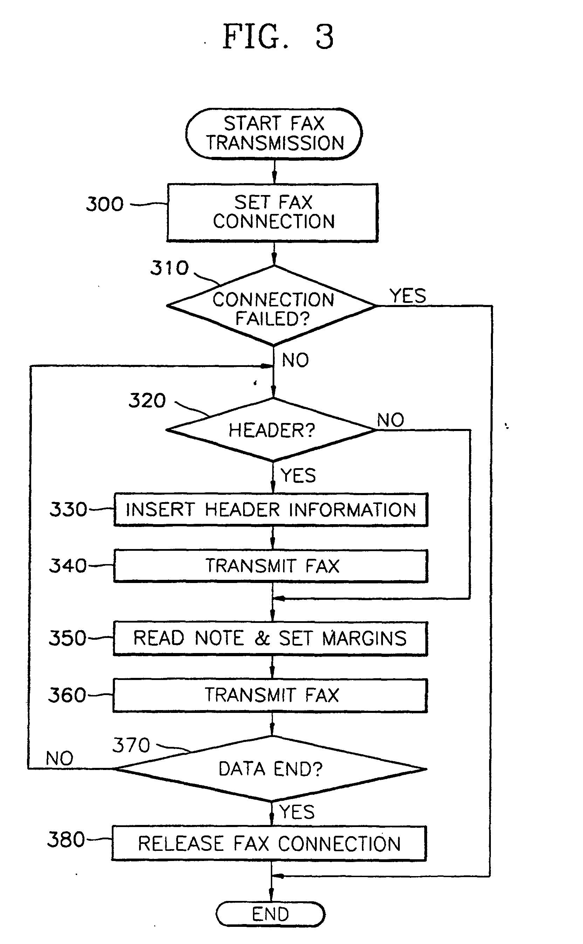

Figure 3 is a detailed flowchart outlining the operation of the fax transmission in step 260. First, the fax connection setter 122 initializes the fax modem to transmit a fax, sets a transmission environment for fax connection to a receiving side, and prepares transmission, in step 300. The fax initialization includes executing a modem initialization instruction and initializing buffers and flags which are used.

If fax connection to the receiving side is successfully performed in step 300, the header insertion/removal information stored in the header information flag 104 is read to determine whether a header is needed or not, in step 320. In step 330, a fax header is inserted if the header information represents fax header insertion. In step 340, fax transmission is performed. If the header information flag 104 does not represent fax header insertion, the procedure goes to the next step.

After the step of fax header insertion or no fax header insertion, the fax note to be transmitted and the margin information are read from the fax note storage 102 and the margin information storage 106, respectively, in step 350, and transmitted in step 360. Steps 320 to 360 are repeated until there is no data to be transmitted, in step 370. If there is no data to be transmitted, fax connection is released in step 380.

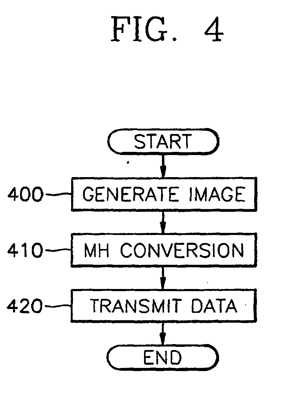

Figure 4 is a detailed flowchart of steps 340 and 360. In step 400, the inserted fax header and the stored note and margin information are converted into bit map image data in the bit map image data generator 128. In step 410, the generated bit map image data is converted into fax transmission data in the data format converter 132. In step 430, the converted data is transmitted via the data transmitter 132.

The printing method has many advantages, including that when notes, for example, a customer specification, a temporary contract, or a customer consultation statement are to be output by fax, the notes can be printed by fax as if they were printed by a general printer, by removing header information in the upper portions of the notes.

## Claims

1. A method in an apparatus for producing printable data for a Personal Digital Assistant, the apparatus having a display (180) for displaying characters and graphic data, a fax modem (160) for transmitting and receiving fax data, and a memory (100) for storing data, said method **characterised by** the steps of:
(a) providing a user interface (122) through said display (180) for selecting a fax note which is stored in said memory (100), inserting or removing a fax header, and allocating upper, lower, right and left margins;
(b) selecting (210) one of a fax header insertion or removal instruction from a menu provided by said user interface;
(c) setting (230) upper, lower, right and left margins for a fax note through said user interface;
(d) selecting (250) a fax note to be transmitted in said user interface;
(e) initialising (260,300) said modem for fax transmission, setting an environment for fax connection to a receiving fax and preparing for transmission;
(f) reading said selected fax header insertion or removal instruction;
(f1) if fax header insertion is indicated, inserting (320,330) a fax header, converting (340,400) said inserted fax header into first bit map image data, converting (410) said first bit map image data into first fax transmission data, transmitting said first fax transmission data, and proceeding to step (g);
(f2) otherwise, if fax header removal is indicated, proceeding to step (g);
(g) converting (400) said fax note and said margin information into second bit map image data, converting (410) said second bit map data image into second fax transmission data, and transmitting (360,420) said second fax transmission data; and
(h) terminating (370) said fax connection if said fax note is completely transmitted, otherwise proceeding to step (f).

2. An apparatus for producing printable data for use with a Personal Digital Assistant, the apparatus having a display (180) for displaying characters and graphic data, a fax modem (160) for transmitting and receiving fax data, and a memory (100) for storing data, the apparatus **characterised by**:
a user interface (122) provided through said display (180) that allows a user to: select a fax note which is stored in said memory (100), select one of a fax header insertion or removal instruction, select margins of a fax note, and receive a fax transmission instruction from a user;
a fax note storage (102) for storing said fax note selected by said user;
a header information flag (104) for storing said fax header insertion or removal instruction selected by said user;
a margin information storage (106) for storing margin information of said fax note selected by said user;
a fax connection setter (124) for initializing said fax modem (160) for fax transmission and setting an environment for fax transmission to a receiving fax machine upon input of said fax transmission instruction from said user interface portion;
a fax header information controller (126) for inserting or removing a fax header according to said fax header insertion or removal instruction represented by said header information flag (104) when fax transmission is ready;
a bit map image generator (128) for reading fax header data inserted by said fax header information controller (126), and said fax note and margin information from said fax note storage (102) and said margin information storage (106), and generating bit map image data;
a data format converter (130) for converting said bit map image data into a data format for fax transmission;
a data transmitter (132) for transmitting said data converted by said data format converter; and
a fax connection releaser (134) for terminating fax connection when data is completely transmitted by said data transmitter;
wherein the fax header information controller (126), the bit map image generator (127), the data format converter (130), the data transmitter (132) and the fax connector releaser (143) are arranged together to perform the steps of:
(f) reading said selected fax header insertion or removal instruction;
(f1) if fax header insertion is indicated, inserting (320,330) a fax header, converting (340,400) said inserted fax header into first bit map image data, converting (410) said first bit map image data into first fax transmission data, transmitting said first fax transmission data, and proceeding to step (g);
(f2) otherwise, if fax header removal is indicated, proceeding to step (g);
(g) converting (400) said fax note and said margin information into second bit map image data, converting (410) said second bit map data image into second fax transmission data, and transmitting (360,420) said second fax transmission data; and
(h) terminating (370) said fax connection if said fax note is completely transmitted, otherwise proceeding to step (f) .

## Patentansprüche

1. Verfahren in einer Vorrichtung zum Erzeugen von druckbaren Daten für einen PDA, wobei die Vorrichtung eine Anzeigeeinrichtung (180) zum Anzeigen von Zeichen und Grafikdaten, ein Fax-Modem (160) zum Senden und Empfangen von Fax-Daten sowie einen Speicher (100) zum Speichern von Daten aufweist und das , Verfahren durch die folgenden Schritte **gekennzeichnet** ist
a) Bereitstellen einer Benutzerschnittstelle (122) über die Anzeigeeinrichtung (180) zum Auswählen einer Fax-Nachricht, die in dem Speicher (100) gespeichert ist, Einfügen oder Entfernen einer Fax-Kopfzeile und Anordnen eines oberen, eines unteren, eines rechten und eines linken Randes;
b) Auswählen (210) eines Befehls zum Einfügen oder Entfernen einer Fax-Kopfzeile aus einem Menü, das durch die Benutzerschnittstelle bereitgestellt wird;
c) Einstellen (230) des oberen, des unteren, des rechten und des linken Randes für eine Fax-Nachricht über die Benutzerschnittstelle;
d) Auswählen (250) einer zu sendenden Fax-Nachricht in der Benutzerschnittstelle;
e) Initialisieren (260, 300) des Modems zum Fax-Senden, Einstellen einer Umgebung für Fax-Verbindung zu einem empfangenden Fax-Gerät und Vorbereiten zum Senden;
f) Lesen des ausgewählten Befehls zum Einfügen oder Entfernen einer Fax-Kopfzeile;
f1) wenn das Einfügen einer Fax-Kopfzeile angezeigt ist, Einfügen (320, 330) einer Fax-Kopfzeile, Umwandeln (340, 400) der eingefügten Fax-Kopfzeile in erste Bitmap-Bilddaten, Umwandeln (410) der ersten Bitmap-Bilddaten in erste Fax-Sendedaten, Senden der ersten Fax-Sendedaten und Übergehen zu Schritt g);
f2) andernfalls, wenn Entfernen der Fax-Kopfzeile angezeigt ist, Übergehen zu Schritt g);
g) Umwandeln (400) der Fax-Nachricht und der Randinformationen in zweite Bitmap-Bilddaten, Umwandeln (410) der zweiten Bitmap-Daten in zweite Fax-Sendedaten, und Senden (340, 420) der zweiten Fax-Sendedaten; und
h) Beenden (370) der Fax-Verbindung, wenn die Fax-Nachricht vollständig gesendet ist, andernfalls Übergehen zu Schritt f).

2. Vorrichtung zum Erzeugen von druckbaren Daten zum Einsatz mit einem PDA, wobei die Vorrichtung eine Anzeigeeinrichtung (180) zum Anzeigen von Zeichen und Grafikdaten, ein Fax-Modem (160) zum Senden und Empfangen von Fax-Daten sowie einen Speicher (100) zum Speichern von Daten aufweist, und die Vorrichtung **gekennzeichnet ist durch**:
eine Benutzerschnittstelle (122), die über die Anzeigeeinrichtung (180) bereitgestellt wird und es einem Benutzer ermöglicht: eine Fax-Nachricht auszuwählen, die in dem Speicher (100) gespeichert ist, einen Befehl zum Einfügen oder Entfernen einer Fax-Kopfzeile auszuwählen, Ränder einer Fax-Nachricht auszuwählen und einen Fax-Sendebefehl von einem Benutzer zu empfangen;
einen Fax-Nachrichten-Speicher (102) zum Speichern der **durch** den Benutzer ausgewählten Fax-Nachricht;
ein Kopfzeileninformations-Flag (104) zum Speichern des **durch** den Benutzer ausgewählten Befehls zum Einfügen oder Entfernen der Fax-Kopfzeile;
einen Randinformations-Speicher (106) zum Speichern von **durch** den Benutzer ausgewählten Randinformationen der Fax-Nachricht;
eine Faxverbindungs-Einstelleinrichtung (124) zum Initialisieren des Fax-Modems (160) zum Fax-Senden und Einstellen einer Umgebung zum Fax-Senden zu einem empfangenden Fax-Gerät beim Eingeben des Fax-Sende-Befehls über den Benutzerschnittstellen-Abschnitt;
einen Fax-Kopfzeileninformations-Controller (126), der entsprechend dem **durch** das Kopfzeileninformations-Flag (104) dargestellten Befehl zum Einfügen oder Entfemen einer Fax-Kopfzeile eine Fax-Kopfzeile einfügt oder entfernt, wenn Bereitschaft zum Fax-Senden vorliegt;
eine Bitmap-Bilderzeugungseinrichtung (128), die **durch** den Fax-Kopfzeileninformations-Controller (126) eingefügte Fax-Kopfzeilendaten sowie die Fax-Nachricht und Randinformationen aus dem Fax-Nachrichten-Speicher (102) und dem Randinformations-Speicher (106) liest und Bitmap-Bilddaten erzeugt;
eine Datenformat-Umwandlungseinrichtung (130), die die Bitmap-Bilddaten in ein Datenformat zum Fax-Senden umwandelt;
eine Daten-Sendeeinrichtung (132), die die **durch** die Datenformat-Umwandlungseinrichtung umgewandelten Daten sendet; und
eine Fax-Verbindungs-Auslöseeinrichtung (134), die Fax-Verbindung beendet, wenn Daten **durch** die Daten-Sendeeinrichtung vollständig gesendet sind;
wobei der Fax-Kopfzeileninformations-Controller (126), die Bitmap-Bilderzeugungseinrichtung (127), die Datenformat-Umwandlungseinrichtung (130), die Daten-Sendeeinrichtung (132) und die Fax-Verbindungs-Auslöseeinrichtung (143) so eingerichtet sind, dass sie die folgenden Schritte ausführen:
f) Lesen des ausgewählten Befehls zum Einfügen oder Entfernen einer Fax-Kopfzeile;
f1) wenn das Einfügen einer Fax-Kopfzeile angezeigt ist, Einfügen (320, 330) einer Fax-Kopfzeile, Umwandeln (340, 400) der eingefügten Fax-Kopfzeile in erste Bitmap-Bilddaten, Umwandeln (410) der ersten Bitmap-Bilddaten in erste Fax-Sendedaten, Senden der ersten Fax-Sendedaten und Übergehen zu Schritt g);
f2) andernfalls, wenn Entfernen der Fax-Kopfzeile angezeigt ist, Übergehen zu Schritt g);
g) Umwandeln (400) der Fax-Nachricht und der Randinformationen in zweite Bitmap-Bilddaten, Umwandeln (410) der zweiten Bitmap-Bilddaten in zweite Fax-Sendedaten, und Senden (340, 420) der zweiten Fax-Sendedaten; und
h) Beenden (370) der Fax-Verbindung, wenn die Fax-Nachricht vollständig gesendet ist, andernfalls Übergehen zu Schritt f).

## Revendications

1. Procédé dans un dispositif pour produire des données imprimables pour un Assistant Numérique Personnel, le dispositif ayant un moyen d'affichage (180) pour afficher des caractères et des données graphiques, un modem de télécopie (160) pour émettre et recevoir des données de télécopie, et une mémoire (100) pour stocker des données, ledit procédé étant **caractérisé par** les étapes consistant à :
(a) créer une interface utilisateur (122) par l'intermédiaire dudit moyen d'affichage (180) pour sélectionner un message de télécopie stocké dans ladite mémoire (100), insérer ou supprimer un en-tête de télécopie, et attribuer des marges supérieure, inférieure, droite et gauche ;
(b) sélectionner (210) une instruction d'insertion ou de suppression d'en-tête de télécopie dans un menu proposé par ledit interface utilisateur;
(c) établir (230) des marges supérieure, inférieure, droite et gauche pour un message de télécopie à l'aide dudit interface utilisateur ;
(d) sélectionner (250) dans ledit interface utilisateur un message de télécopie à émettre ;
(e) initialiser (260,300) ledit modem pour l'émission d'une télécopie, créer des conditions de connexion de télécopie pour une télécopie à recevoir et préparer une émission ;
(f) lire ladite instruction choisie d'insertion ou de suppression d'en-tête de télécopie ;
(f1) si une insertion d'en-tête de télécopie est indiquée, insérer (320, 330) un en-tête de télécopie, convertir (340, 400) ledit en-tête de télécopie inséré en premières données d'image pixélisée, convertir (410) lesdites premières données d'image pixélisée en premières données d'émission de télécopie, émettre lesdites premières données d'émission de télécopie et passer à l'étape (g) ;
(f2) autrement, si la suppression de l'entête de télécopie est indiquée, passer à l'étape (g) ;
(f) convertir (400) ledit message de télécopie et lesdites informations de marges en secondes données d'image pixélisée, convertir (410) lesdites secondes données d'image pixélisée en secondes données d'émission de télécopie, et émettre (360, 420) lesdites secondes données d'émission de télécopie ; et
(g) mettre fin (370) à ladite connexion de télécopie si ledit message de télécopie est entièrement émis, autrement passer à l'étape (f).

2. Dispositif pour produire des données imprimables utilisables avec un Assistant Numérique Personnel, le dispositif ayant un moyen d'affichage (180) pour afficher des caractères et des données graphiques, un modem de télécopie (160) pour émettre et recevoir des données de télécopie, et une mémoire (100) pour stocker des données, le dispositif étant **caractérisé par** :
une interface utilisateur (122) créée par l'intermédiaire dudit moyen d'affichage (180), qui permet à un utilisateur de : sélectionner un message de télécopie stocké dans ladite mémoire (100), sélectionner une instruction d'insertion ou de suppression d'en-tête de télécopie, sélectionner des marges d'un message de télécopie et recevoir d'un utilisateur une instruction d'émission de télécopie ;
un moyen de stockage (102) de message de télécopie pour stocker ledit message de télécopie sélectionné par ledit utilisateur ;
un indicateur (104) d'informations d'entête servant à stocker ladite instruction d'insertion ou de suppression d'en-tête de télécopie sélectionnée par ledit utilisateur ;
un moyen de stockage (106) d'informations de marges servant à stocker des informations de marges dudit message de télécopie sélectionné par ledit utilisateur ;
un moyen d'établissement de connexion de télécopie (124) servant à initialiser ledit modem de télécopie (160) pour une émission de télécopie et à créer des conditions pour l'émission d'une télécopie vers un télécopieur de réception au moment de l'entrée de ladite instruction d'émission de télécopie depuis ladite partie formant interface utilisateur ;
un moyen de commande (126) d'informations d'en-tête de télécopie servant à insérer ou supprimer un en-tête de télécopie en fonction de ladite instruction d'insertion ou de suppression d'en-tête de télécopie représentée par ledit indicateur (104) d'informations d'en-tête lorsque ladite émission de télécopie est prête;
un générateur (128) d'image pixélisée servant à lire dans ledit moyen de stockage (102) de message de télécopie des données d'en-tête de télécopie insérées par ledit moyen de commande (126) d'informations d'en-tête de télécopie, et lesdites informations de message et de marges de télécopie, et à générer des données d'image pixélisée ;
un convertisseur (130) de format de données servant à convertir lesdites données d'image pixélisée sous un format de données permettant l'émission d'une télécopie ;
un émetteur (132) de données servant à émettre lesdites données converties par ledit convertisseur de format de données ; et
un moyen de libération (134) de connexion de télécopie pour mettre fin à une connexion de télécopie lorsque des données sont entièrement émises par ledit émetteur de données ;
dans lequel le moyen de commande (126) d'informations d'en-tête de télécopie, le générateur (127) d'image pixélisée, le convertisseur (130) de format de données, l'émetteur (132) de données et le moyen de libération (143) de connexion de télécopie étant agencés ensemble pour exécuter les étapes consistant à :
(f) lire ladite instruction d'insertion ou de suppression d'en-tête de télécopie sélectionnée ;
(f1) si une insertion d'en-tête de télécopie est indiquée, insérée (320, 330) un en-tête de télécopie, convertir (340, 400) ledit en-tête de télécopie insérée en premières données d'image pixélisée, convertir (410) lesdites premières données d'image pixélisée en premières données d'émission de télécopie, émettre lesdites premières données d'émission de télécopie et passer à l'étape (g) ;
(f2) autrement, si une suppression d'en-tête de télécopie est indiquée, passer à l'étape (g);
(g) convertir (400) lesdites informations de message et de marges de télécopie en secondes données d'image pixélisée, convertir (410) lesdites secondes données d'image pixélisée en secondes données d'émission de télécopie,et émettre (360, 420) lesdites secondes données d'émission de télécopie ; et
(h) mettre fin (370) à ladite connexion de télécopie si ledit message de télécopie est entièrement émis, autrement passer à l'étape (f).
